# EUROPEAN PATENT APPLICATION

(11) **EP 4 049 543 A1**
(43) Date of publication of application: **31.08.2022**
(21) Application number: 21386070.3
(22) Date of filing: 11.11.2021
(51) Int. Cl.: A23L 19/00

(54) **METHOD OF PRODUCING A NATURAL PRODUCT RICH IN FLAVOR AND PHENOLIC INGREDIENTS, FROM THE VEGETATION WATER OF AN OLIVE MILL AND FROM OLIVE CAKE**

(30) Priority: 26.11.2020 GR 20200100704
(71) Applicant: Stymon Natural Products I.K.E., 25018 Patra (GR)
(72) Inventor: Parthenopoulos, Dimitrios-Alfredos, Pully (CH); Pettas, Paraskevas, 26222 Patra (GR); Chaloulos, Konstantinos, 15344 Gerakas, Attiki (GR); Chaloulos, Ioannis-Ektor, son of Konstantinos, 15344 Gerakas, Attiki (GR)

(57) **Abstract**

This invention provides a method of producing a natural product in cake or powder form, resulting from the processing of liquid or solid byproducts of the olive mill, so that the product has a distinctive olive flavor and is rich in polyphenols.

The raw material comes from the concentration of the olive-mill vegetation water. Alternatively the vegetation water directly, or the crude olive cake can be used as raw material. The concentrated or non-concentrated vegetation water is centrifuged and filtered and then dried in appropriate conditions. Alternatively the crude olive cake is dried and then its wooden kernel shell part is removed. This natural product can be used in foodstuff or animal feed for the improvement of their organoleptic characteristics and for its antioxidant, antibacterial and antifungal properties. It can also be used in cosmetics and in the pharmaceutical industry.

## Description

This invention provides a method of producing a natural product in cake or powder form, resulting from the processing of liquid (vegetation water) or solid (crude olive cake)byproducts of the olive mill, so that the product has a distinctive olive flavor and is rich in polyphenols.

Until today, conventional products of this kind can be found in the market or are mentioned in the scientific literature or have been patented but all of them are produced in entirely different ways than this invention. For example, they are produced using organic solvents by which the phenols are extracted from the raw material, followed by chromatographic separation, or the raw material is centrifuged, followed by extraction with organic solvents and finally filtration. As well other methods have been described such as filtration of the raw material using resins, enzymatic hydrolysis followed by filtration and finally extraction with supercritical carbon dioxide. The use of the reverse osmosis technology and the combination of the known filtration methods are also mentioned as methods of production. Another method is the chromatographic separation of certain phenols in several stages followed by distillation at low temperature. In another case, powder is produced from the vegetation water of the olive mill by spray drying followed optionally by organic solvent washing. The result of the aforementioned methods is a polyphenol powder whose flavor characteristics are totally different from the present invention's ones.

In this case, this invention is a method consisting strictly of a physical process without adding organic solvents for the extraction of the polyphenols. In this invention, the whole process takes place under mild conditions in order to avoid the degradation of the included natural substances and the deterioration of the organoleptic characteristics of the product. Subsequently, by using the appropriate packaging and storage conditions the product is preserved so that both the organoleptic characteristics of the olive fruit and its antioxidant potential remain undeteriorated, since the invention contains a high percentage of phenols mainly hudroxytyrosol, tyrosol and oleuropein.

In this invention, the raw material is the concentrated by natural processes vegetation water, which is usually disposed of by the olive mill as waste. Alternatively, the vegetation water from the olive mill can be used directly as the raw material of this invention. Also alternatively, the olive cake produced during the milling of the olive fruit can be used as a raw material in this invention.

In this invention, after examination in the laboratory of its physical and chemical characteristics, the liquid raw material is centrifuged and/or filtered appropriately. The selected method of filtration results in the removal of the solid residue of the vegetation water without deteriorating the organoleptic characteristics of the raw material. In this invention, after the filtration is completed, follows the removal of the water of the raw material to concentrate the product such that its content in polyphenols, taste and aromatic ingredients, specific to the olive fruit, is high. As a result, the product maintains the organoleptic characteristics of the olive fruit and is highly antioxidant.

The process of preparing the final product according to the present invention and, in particular, the final product in solid form that is derived from olive-milling byproducts, consists of several steps which are described below. Firstly, the producer receives the olive-mill vegetation water, concentrated or non-concentrated, and then checks its organoleptic characteristics and the percentage of its solid residue in order to choose the appropriate filtration method and conditions. Furthermore, if the vegetation water is concentrated and its moisture percentage is less than 70% or non-concentrated and its moisture percentage is over 90%, the producer chooses the appropriate method of filtration for the removal of the solids. The next step is the removal of the solid residue with the chosen method, which can be the centrifugation. Alternatively or after the centrifugation the producer can filter the raw material with appropriate membranes with pore size of 50 to 200 nanometers (Ultrafiltration), which results in the removal of the solid elements. The pressure applied during the filtration and the timeit is applied depend on the specific properties of the raw material determined from the aforementioned laboratory examination.

Filtration removes a large percentage of the aqueous phase of the raw material,which is the filtrate. This filtrate contains a large percentage of the polyphenols and the taste and aromatic ingredients of the raw material. This liquid filtrate can be further processed by adding densification agents in a percentage of 1-15%, such as sodium alginate, maltodextrin and other natural additives usually used in the food industry. In case the crude olive cake has a moisture between 45-75%, it can be alternatively used as a raw material. The next step is the vacuum drying of the intermediate product. This vacuum drying takes place at temperatures of up to 60 °Cand pressure of 0.1- 0.2 bar in a vacuum oven. Alternatively, freeze-drying can be used where the product is frozen at a temperature of -35°C followed by sublimation of its moisture at a pressure of less than 0.005 bar. The intermediate product in cake form produced at this stage is further processed by mild grinding so that the final product has the appropriate granulometry. In case the dried raw material is crude olive cake there is a preliminary stage before the grinding where its wooden kernel shells are removed. The grinder is manufactured in a way that during the grinding the product is not subjected to high temperatures. The grinder is also manufactured so that its interior atmosphere is controlled in order for the grinding to take place in low humidity conditions, less than 20%. As a result the product, which is hygroscopic, does not uptake any humidity.

After its preparation, the product produced according to this invention is packed immediately in special package in a place with low humidity (lower than 25%) so that it does not uptake any humidity. The final product' s moisture is between 1-5%.

This invention contains natural substances originating from the natural ingredients of the olive fruit and, optionally, natural food additives and also contains natural polyphenols up to 100000 mg/Kg (ppm).

This invention has organoleptic characteristics alike those of the olive and can be used as an additive to other foodstuff in order to improve their organoleptic characteristics or even their volume.

This invention has antioxidant properties and for this reason it can be used in foodstuff, cosmetics or in pharmaceutical substances.

This invention has antibacterial and antifungal properties and for this reason it can be used in foodstuff, cosmetics or in pharmaceutical substances.

The present invention is rich in taste, aroma and antioxidant compounds present in the olive fruit and with the present invention it is possible to encapsulate them for preservation during the preparation of food or other products to which they are added.

This invention can be used as animal feed or as an additive to animal feed.

The present invention results from a production operation which consists of gentle processes, aimed at concentrating phenolic substances in the filtrate without degrading them.

## Claims

1. This invention provides a method of producing a natural product in cake or powder form, resulting from the processing of liquid (vegetation water) or solid (crude olive cake)byproducts of the olive oil production process, so that the product has a distinctive olive flavor and is rich in polyphenols. This method includes the following stages which are a) the centrifugation or filtration of the liquid raw material where it is necessary and optionally the addition of encapsulation or densification agents, b) vacuum drying or freeze-drying, c) removal of the wooden kernel shells where necessary, and d) gentle grinding of the intermediate product so that its physicochemical and organoleptic characteristics are preserved.

2. Method of production of a natural product according to Claim No. 1 where at the first stage the solid residues are removed by the selected filtering method with appropriate membranes with pore size of 50 to 200 nanometers or centrifugation. Encapsulation or densification agents can be optionally added.

3. Method of production of a natural product according to Claim No. 1 where at the second stage the moisture is removed by drying at temperatures of 60 °Cand pressure of 0.1- 0.2 bar or alternatively by freeze-drying, after freezing at a temperature of at least -35°C,under pressure conditions of less than 0.005 bar.

4. Method of production of a natural product according to Claim No. 1 where at the third stage, when the dried raw material is crude olive cake, its wooden kernel shell is removed by fluid bed technology or any other appropriate material separation method based on the difference of the specific weight of the raw-material components.

5. Method of production of a natural product according to Claim No. 1 where at the fourth stage the grinding is according to an appropriate technology, in order to avoid an increase of the temperature and moisture of the product. In this case, the grinding takes place at low relative humidity conditions, less than 20%.

6. This method of production of a natural product according to the preceding claims makes possible the production of a product which is rich in taste, aroma and antioxidant substances present in the olive fruit, their encapsulation is optionallypossible in order that they be preserved. It contains only natural substances originating from the vegetal substances of the olive fruit, it optionally includes natural food additives and also contains natural polyphenols up to 100000 mg/Kg (ppm).

7. This method of production of a natural product according to Claims No. 1-5 makes possible such a product, which has antioxidant, antibacterial and antifungal properties and for these reasons can be used in foods, cosmetics or in pharmaceutical substances and can also be used as animal feed or as an additive to animal feed.

8. This invention, according to Claims 1-5, is a production method that includes gentle operations in order to concentrate the phenolic substances and avoid their degradation, the preservation of the organoleptic characteristics alike those of the olive fruit, and the product produced according to this method can be used as an additive to other foodstuff in order to improve their organoleptic characteristics or even their volume.
